# EUROPÄISCHE PATENTSCHRIFT

(11) **EP 3 995 705 B1**
(45) Veröffentlichungstag und Bekanntmachung des Hinweises auf die Patenterteilung: **20.12.2023**
(21) Anmeldenummer: 21205895.2
(22) Anmeldetag: 02.11.2021
(51) Int. Cl.: F16B 7/04, F16B 1/00

(54) **VORRICHTUNG ZUM BEFESTIGEN AN EINEM LÄNGLICHEN ELEMENT**
DEVICE FOR FIXING TO AN ELONGATED ELEMENT
DISPOSITIF DE FIXATION À UN ÉLÉMENT OBLONG

(30) Priorität: 09.11.2020 DE 102020129472
(43) Veröffentlichungstag der Anmeldung: 11.05.2022
(73) Patentinhaber: Beichert, Alexander, 79692 Kleines Wiesental (DE)
(72) Erfinder: Beichert, Alexander, 79692 Kleines Wiesental (DE)
(74) Vertreter: RACKETTE Patentanwälte PartG mbB

(56) Entgegenhaltungen:
- EP-A1- 2 677 603
- DE-B4-102011 119 602
- US-A- 2 220 203
- US-B2- 6 599 054

## Beschreibung

Die Erfindung betrifft Vorrichtungen zum Befestigen an wenigstens einem länglichen Element gemäß den Oberbegriffen der Ansprüche 1 und 2.

Eine gattungsgemäße Vorrichtung zum Befestigen an wenigstens einem länglichen Element ist aus US 2 220 203 A bekannt. Die vorbekannte, zum Verbinden von zwei Enden von Kabeln als längliche Elemente vorgesehene Vorrichtung verfügt über einen sich in einer Längsrichtung erstreckenden Aufnahmeabschnitt zum Aufnehmen von jeweils einem Ende von zwei Kabeln und ist mit einem Klemmmittel zum Befestigen des Aufnahmeabschnitts an den Enden der Kabel ausgestattet. Dabei ist der Aufnahmeabschnitt mit zwei Seitenwangen und mit einer sich zwischen den Seitenwangen erstreckenden Bodenwange ausgebildet, die einen einseitig offenen Aufnahmeraum begrenzen. Eine Innenseite der Bodenwange ist unter Ausbilden einer Schräge gegenüber der Längsrichtung schräg angestellt. Das Klemmmittel ist ein dem Aufnahmeabschnitt zugeordnetes Schiebeteil, das den Aufnahmeabschnitt bereichsweise unter Überdecken der offenen Seite des Aufnahmeraums umschließt. Das Schiebeteil ist mit einem Innenwandabschnitt ausgebildet, der bei den Aufnahmeabschnitt umschließender Anordnung des Schiebeteils zu der Innenseite der Bodenwange komplementär schräg ausgebildet ist.

Aus DE 10 2011 119 602 B4 ist ein Spanngut-Verbinder zum Verbinden von unter Spannung stehenden Enden von Spanngut bekannt, der über eine Klemmeinrichtung zum Festklemmen eines ersten Spannguts und über eine Befestigungseinrichtung für eine Halteeinrichtung zum Festlegen eines zweiten Spannguts ausgebildet ist.

Eine weitere Vorrichtung zum Befestigen an einem länglichen Element ist aus DE 370 676 A bekannt. Diese gattungsgemäße Vorrichtung ist mit einem sich in einer Längsrichtung erstreckenden Aufnahmeabschnitt zum Aufnehmen einer Freilandleitung als länglichem Element ausgestattet und verfügt über ein Klemmmittel zum Befestigen des Aufnahmeabschnitts an einer Freilandleitung. Der Aufnahmeabschnitt ist mit zwei Seitenwangen und mit einer sich zwischen den Seitenwangen erstreckenden Bodenwange ausgebildet, die einen einseitig offenen Aufnahmeraum begrenzen. Eine Innenseite der Bodenwange ist unter Ausbilden einer Schräge wenigstens abschnittsweise gegenüber der Längsrichtung schräg angestellt. Bei der gattungsgemäßen Vorrichtung ist das Klemmteil als ein stabförmiger Keil ausgebildet, der zwischen die Freilandleitung und das als offene Hülse ausgebildete Klemmmittel einschiebbar ist.

Eine weitere Vorrichtung zum Befestigen an einem Ende wenigstens eines Stabs als längliches Element ist aus EP 2 087 847 A1 bekannt. Diese vorbekannte Vorrichtung ist mit einem sich in einer Längsrichtung erstreckenden Aufnahmeabschnitt zum Aufnehmen eines Endes eines Stabs ausgestattet und verfügt über ein Klemmmittel zum Befestigen des Aufnahmeabschnitts an einem Ende eines Stabs. Zum Verbinden von zwei Enden von zwei Stäben sind dabei zwei Aufnahmeabschnitte vorgesehen, die jeweils ein Ende eines Stabs in Umfangsrichtung umschließen. Das Klemmmittel ist mit einer Anzahl von Klemmschrauben ausgestattet, die in in den Aufnahmeabschnitten ausgebildeten Gewindelöchern zum klemmenden Befestigen jeweils eines Endes eines Stabs einschraubbar sind.

Aus EP 2 677 603 A1 ist ein Seil- und Litzenverbinder für elektrische Weidezäune bekannt. Dieser Verbinder besteht im Wesentlichen aus einer Strom leitenden Platte mit an ihren Randbereichen ausgeformten, dem Querschnitt der Seile oder Litzen angepassten Aussparungen und auf den Platten vor den Aussparungen angeordneten Kappen, welche mit ihren dem Querschnitt der Platten angepassten Durchgangsöffnungen auf der Strom leitenden Platte über die Aussparungen verschiebbar geführt sind. Hierbei sind die Innenwände der Kappen so ausgebildet, dass diese über die in die Aussparungen eingeführten Enden der Seile oder Litzen nach dem Umknicken über die Außenkanten der Aussparungen verschiebbar sind und dabei die Seilenden an den Randbereichen festklemmen.

Aus US 8,756,885 B1 ist eine Doppelhülsenanordnung mit einer eine Innenhülse umschließenden Außenhülse bekannt, wobei die Außenhülse und die Innenhülse an ihren einander zugewandten Seiten mit zueinander komplementären Schrägen ausgebildet sind. Dadurch lässt sich ein in die Innenhülse eingeschobenes stabförmiges Element klemmen.

Aus DE 39 20 677 A1 ist ein elektrischer Verbinder zum lösbaren Verbinden eines Flachanschlusses beispielsweise auf einer medizinischen Elektrode mit einem Leitungsdraht bekannt. Der Verbinder hat ein Gehäuse mit einem durch dieses verlaufenden Kanal und in diesem ein Betätigungselement. Im Gehäuse bildet eine erste Anschlussanlagefläche eine Seite des Kanals. Eine zweite Anschlussanlagefläche auf dem Betätigungselement ist komplementär zur ersten Anschlussanlagefläche des Gehäuses ausgebildet. Das Betätigungselement ist allgemein diagonal zum Kanal im Gehäuse zwischen einer Offenstellung, in der die Anschlussanlageflächen einen Abstand von mindestens der Dicke des Elektrodenanschlusses haben, so dass dieser zwischen sie eingeschoben werden kann, und einer verkeilten Stellung verschiebbar, in der die Anschlussanlageflächen nahe genug beieinander liegen, um den Anschluss zwischen sich festzuklemmen und ihn so im Verbinder festzulegen.

Aus DE 1 192 001 A ist eine Seilklemme mit einer Außenhülse und mit einer Innenhülse bekannt, wobei die Außenhülse und die Innenhülse mit zueinander komplementären Schrägen ausgebildet sind.

Aus DE 35 36 926 ist eine Keilverankerung von Vorspanngliedern im Beton mit einer Außenhülse und einer Innenhülse bekannt, die ebenfalls zueinander komplementäre Schrägen aufweisen.

Der Erfindung liegt die Aufgabe zugrunde, eine Vorrichtung zum Befestigen an einem Ende wenigstens eines länglichen Elements wie insbesondere eines Stabs der eingangs genannten Art anzugeben, die sich durch eine sehr einfache und sichere werkzeugfreie Handhabung bei der Reparatur von Schadstellen beispielsweise an Weidezäunen auszeichnet.

Diese Aufgabe wird erfindungsgemäß bei einer Vorrichtung zum Befestigen an einem Ende wenigstens eines länglichen Elements gemäß dem Oberbegriff des Anspruchs 1 erfindungsgemäß mit den kennzeichnenden Merkmalen des Anspruchs 1 gelöst.

Diese Aufgabe wird erfindungsgemäß bei einer Vorrichtung zum Befestigen an einem Ende wenigstens eines länglichen Elements gemäß dem Oberbegriff des Anspruchs 2 erfindungsgemäß mit den kennzeichnenden Merkmalen des Anspruchs 2 gelöst.

Dadurch, dass gemäß einem Aspekt der Erfindung ein einziger Aufnahmeabschnitt entweder mit einem eine Durchführausnehmung aufweisenden Randabschnitt verbunden ist oder dass gemäß einem weiteren Aspekt der Erfindung zwei Aufnahmeabschnitte vorhanden sind, die beidseitig eines an die Aufnahmeabschnitte angrenzenden Mittenabschnitts angeordnet sind, lassen sich Reparaturen von Schadstellen beispielsweise an Weidezäunen wie Ablösen eines Stabs von Litzen oder das erneute Verbinden von Enden eines gebrochenen Stabs durchführen.

Weitere zweckmäßige Ausgestaltungen der Erfindung sind Gegenstand der abhängigen Ansprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer Draufsicht einen mit einer Anzahl von sich in einer Längsrichtung erstreckenden elektrisch leitfähigen Litzen sowie einer Anzahl von sich in einer Querrichtung erstreckenden, elektrisch isolierenden Stäben ausgebildeten Weidezaun sowie Ausführungsbeispiele der Erfindung, die zum Verbinden von Litzen, zum Verbinden von Stäben sowie zum Verbinden von Litzen und Stäben ausgebildet sind,
- Fig. 2: in einer perspektivischen Ansicht ein Ausführungsbeispiel der Erfindung, das zum Verbinden von Litzen und von Stäben ausgebildet ist,
- Fig. 3: in einer perspektivischen Ansicht ein Ausführungsbeispiel der Erfindung, das zum Verbinden von zwei Stäben mit zwei Aufnahmeabschnitten und mit zwei als Schiebehülsen ausgebildeten Schiebeteilen ausgestattet ist,
- Fig. 4: in einem Längsschnitt das Ausführungsbeispiel gemäß Fig. 3 beim Verbinden von Enden von zwei Stäben mit verhältnismäßig kleinen Querschnittsdimensionen mit den Schiebehülsen in einer klemmenden Endstellung,
- Fig. 5: in einem Querschnitt das Ausführungsbeispiel gemäß Fig. 3 und Fig. 4 mit der dargestellten Schiebehülse in der klemmenden Endstellung,
- Fig. 6: in einem Längsschnitt das Ausführungsbeispiel gemäß Fig. 3 zum Verbinden von Enden von zwei Stäben mit verhältnismäßig kleinen Querschnittsdimensionen mit den Schiebehülsen in einer noch losen Anfangsstellung und
- Fig. 7: in einem Längsschnitt das Ausführungsbeispiel gemäß Fig. 3 beim Verbinden von Enden von zwei Stäben mit verhältnismäßig großen Querschnittsdimensionen mit den Schiebehülsen in einer klemmenden Endstellung.

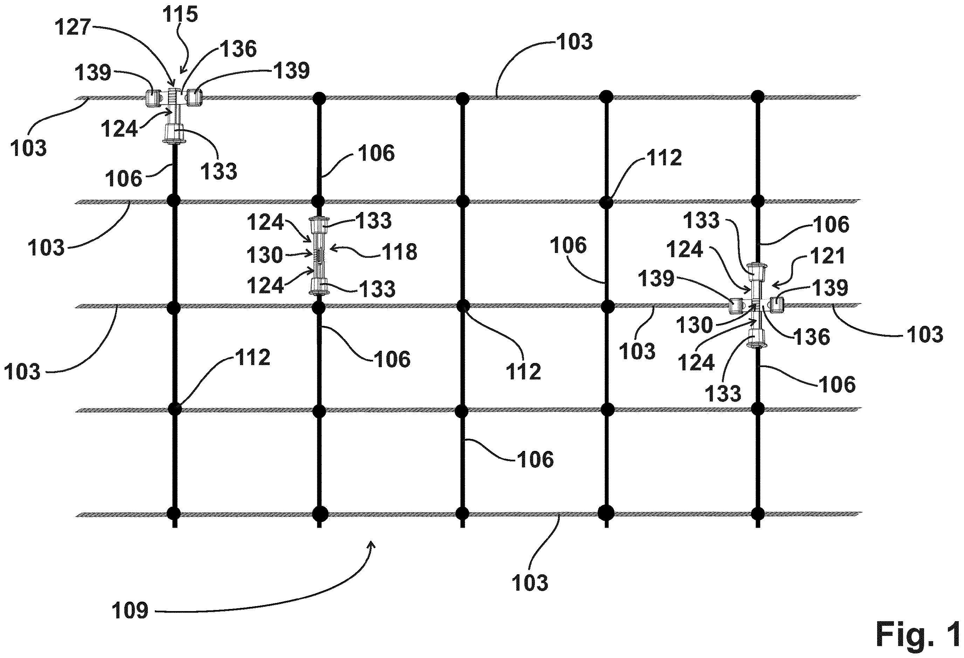

Fig. 1 zeigt in einer Draufsicht in einem Ausschnitt einen mit einer Anzahl von sich in einer Längsrichtung erstreckenden elektrisch leitfähigen Litzen 103 sowie mit einer Anzahl von sich in einer Querrichtung erstreckenden, elektrisch isolierenden sowie gegenüber den Litzen 103 biegesteiferen Stäben 106 als längliche Elemente ausgebildeten und an sich bekannten mobilen Weidezaun 109, der beispielsweise beim zeitweiligen Einhegen einer Weidefläche für Schafe oder Ziegen zum Einsatz kommt.

Typischerweise sind die üblicherweise aus Kunststofffäden mit eingelagerten dünnen biegsamen Metalldrähten aufgebauten Litzen 103 in Kreuzungsbereichen mit üblicherweise aus einem verhältnismäßig harten, mitunter auch glasfaserverstärkten Kunststoff aufgebauten Stäben 106 über Verbindungsknotenwulste 112 mit den Stäben 106 verbunden, um einen verhältnismäßig stabilen maschenartigen Aufbau des Weidezauns 109 zu erhalten.

Im praktischen Einsatz eines derartigen Weidezauns 109 hat sich jedoch gezeigt, dass alterungsbedingt oder auch durch übermäßiges Stauchen in Längsrichtung Stäbe 106 insbesondere auch an Verbindungsknotenwulsten 112 brechen als auch Litzen 103 insbesondere auch im Bereich von bei bestimmungsgemäßer Anordnung des Weidezauns 109 oben angeordneten Verbindungsknotenwulsten 112 durch Überlastung reißen können.

Zum Reparieren derartiger Schadstellen an Litzen 103 und Stäben 106 sind in Fig. 1 als Ausführungsbeispiele der Erfindung ein zum Verbinden von gerissenen Litzen 103 an einem Ende eines Stabs 106 befestigter T-Verbinder 115, zum Verbinden von einander gegenüberliegenden Enden von zwei Stäben 106 als Teilstücke eines ursprünglich längeren Stabs 106 ausgebildeter Axialverbinder 118 und zum Verbinden von gerissenen Litzen 103 sowie zum Verbinden von einander gegenüberliegenden Enden von zwei Stäben 106 als Teilstücke eines ursprünglich längeren Stabs 106 bei einem Verbindungsknotenwulsten 112 ausgebildeter Kreuzverbinder 121 dargestellt.

Der T-Verbinder 115, der Axialverbinder 118 und der Kreuzverbinder 121 sind mit wenigstens einem Aufnahmeabschnitt 124 zum Aufnehmen eines Endes eines Stabs 106 ausgebildet, wobei der T-Verbinder 115 genau einen Aufnahmeabschnitt 124, der an einen Randabschnitt 127 angrenzt, und der Axialverbinder 118 sowie der Kreuzverbinder 121 zwei Aufnahmeabschnitte 124 aufweisen, die beidseitig eines Mittenabschnitt 130 und sich in einer Längsrichtung erstreckend angeordnet sind.

Die Aufnahmeabschnitte 124 sind von jeweils einer in Längsrichtung der Aufnahmeabschnitte 124 verschiebbaren Schiebehülse 133 als Klemmmittel in Gestalt eines werkzeugfrei handhabbaren Schiebeteils umschlossen und in der Darstellung gemäß Fig. 1 in einer die in den Aufnahmeabschnitten 124 angeordneten Enden der Stäbe 106 klemmenden und damit die Aufnahmeabschnitte 124 an dem jeweiligen Ende des Stabs 106 befestigenden Endstellung dargestellt.

Weiterhin lässt sich der Darstellung gemäß Fig. 1 entnehmen, dass in dem Randabschnitt 127 des dargestellten T-Verbinders 115 und in dem Mittenabschnitt 130 des dargestellten Kreuzverbinders 121 eine aus einem elektrisch leitfähigen Material hergestellte Verbindungsplatte 136 als Querstück angeordnet ist, mit der mittels von endseitig angeordneten, in Längsrichtung der Verbindungsplatte 136 verschiebbaren Kontaktierhülsen 139 zwei einander gegenüberliegende Enden einer gerissenen Litze 103 mechanisch und elektrisch wieder miteinander verbindbar sind, wie dies beispielsweise in dem Dokument EP 2 677 603 A1 detailliert offenbart ist.

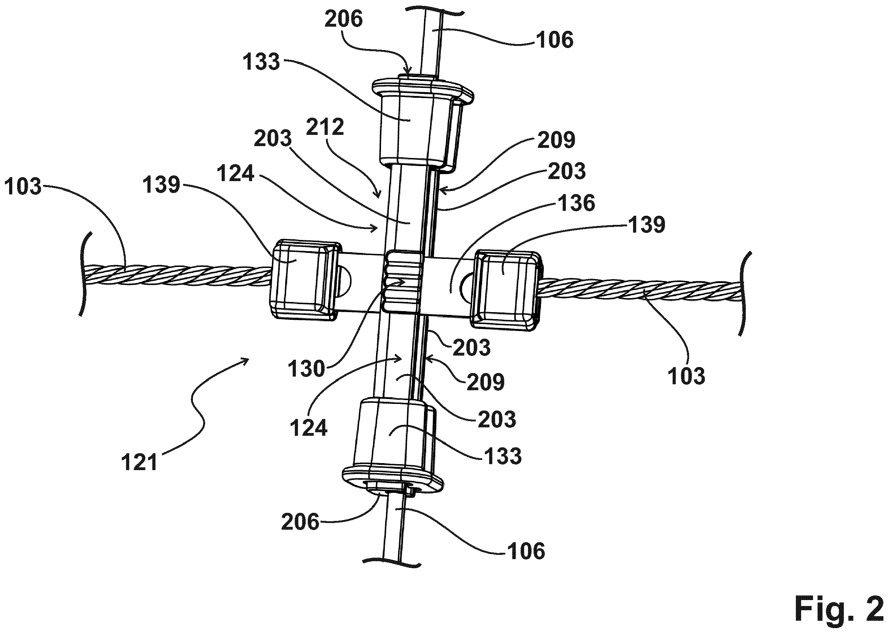

Fig. 2 zeigt in einer perspektivischen Ansicht ein anhand Fig. 1 bereits erläutertes Ausführungsbeispiel der Erfindung in Gestalt eines Kreuzverbinders 121, der zum vorgenannten Verbinden von zwei Enden einer bei einem Verbindungsknotenwulst 112 gerissenen Litze 103 und von zwei Stäben 106, die aus einem gebrochenen Stab 106 hervorgegangen sind, ausgebildet ist. Aus der Darstellung gemäß Fig. 2 ist ersichtlich, dass jeder Aufnahmeabschnitt 124 U-artig mit zwei in einem Abstand in Querrichtung einander gegenüberliegenden Seitenwangen 203 und mit einer die Seitenwangen 203 in Querrichtung miteinander verbindenden Bodenwange 206 aufgebaut ist. Die Seitenwangen 203 und die Bodenwange 206 umschließen auf drei Randseiten einen somit zu einer Deckseite offenen Stabaufnahmeraum 209 als Aufnahmeraum, der zum Aufnehmen jeweils eines Endes eines Stabs 106 vorgesehen ist. Die beiden Enden der Stäbe 106 sind in der Darstellung gemäß Fig. 2, wie weiter unten näher erläutert, mit den sich in einer jeweiligen Endstellung befindlichen Schiebehülsen 133 geklemmt.

Die beiden Aufnahmeabschnitte 124 mit dem zwischen den Aufnahmeabschnitten 124 liegenden Mittenabschnitt 130 bilden einen sich in einer Längsrichtung erstreckenden Lagerkörper 212, auf dem die beiden Schiebehülsen 133 in Längsrichtung verschiebbar gelagert sind.

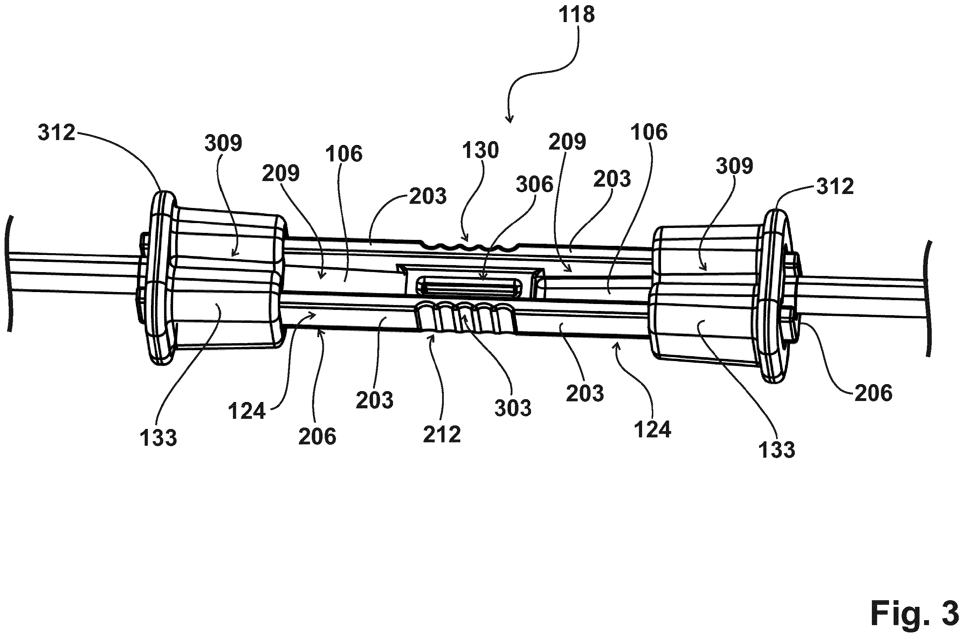

Fig. 3 zeigt in einer perspektivischen Ansicht ein Ausführungsbeispiel der Erfindung in Gestalt des bereits in Zusammenhang mit Fig. 1 erläuterten Axialverbinders 118, der zum Verbinden von zwei mit jeweils einem verhältnismäßig kleinen Querschnitt ausgebildeten Stäben 106 mit zwei Aufnahmeabschnitten 124 und mit zwei Schiebehülsen 133 ausgestattet ist. Jeder Aufnahmeabschnitt 124 des Axialverbinders 118, der bezüglich des Lagerkörpers 212 und der Schiebehülsen 133 den gleichen Aufbau wie der anhand Fig. 2 erläuterte Kreuzverbinder 121 hat, weist einen rechteckigen Querschnitt auf und steht mit einem Ende mit dem Mittenabschnitt 130 in Verbindung, der für eine verhältnismäßig rutschsichere Greifbarkeit beispielsweise zwischen einem Daumen sowie einem Zeigefinger einer Hand außenseitig über eine Griffriffelung 303 verfügt und mit einer innenseitig angeordneten Durchführausnehmung 306 ausgebildet ist, die bei einem Axialverbinder 118 frei bleibt und zum Ausbilden eines Kreuzverbinders 121 eine Verbindungsplatte 136 aufnimmt.

Im Falle des Axialverbinders 118 und im Falle des Kreuzverbinders 121 sind die Schiebehülsen 133 vor Einführen der Verbindungsplatte 136 in die Durchführausnehmung 306 in Längsrichtung über den gesamten Lagerkörper 212 verschiebbar, so dass bei entsprechender Anordnung einer Schiebehülse 133 axial neben einem Aufnahmeabschnitt 124 der Stabaufnahmeraum 209 über seine gesamte Länge einseitig offen ist. Dadurch lässt sich ein Ende eines Stabs 106 besonders einfach in den Stabaufnahmeraum 209 einlegen, bevor eine Schiebehülse 133 auf den betreffenden Aufnahmeabschnitt 124 aufgeschoben wird.

Die Schiebehülsen 133 sind in ihren an die jeweilige offene Seite des Stabaufnahmeraums 209 angrenzenden Bereichen mit einer gegenüber den übrigen innenseitigen Wandbereichen der Schiebehülsen 133 nach radial innen vorstehenden Einbuchtung 309 versehen, so dass die Schiebehülsen 133 verdrehsicher und in lediglich einer bestimmungsgemäßen Anordnung auf die Aufnahmeabschnitte 124 aufschiebbar sind.

Weiterhin lässt sich der Darstellung gemäß Fig. 3 entnehmen, dass die Schiebehülsen 133 randseitig mit einer nach radial außen überstehenden Randwulst 312 ausgebildet sind, die ein zuverlässiges händisches Greifen und Verschieben der Schiebehülsen 133 auch gegen weiter unten näher erläuterte Klemmkräfte erleichtern.

Zweckmäßigerweise weisen die Aufnahmeabschnitte 124 an ihren dem Randabschnitt 127 beziehungsweise dem Mittenabschnitt 130 abgewandten Endseiten als Struktur zur Verliersicherung geringfügig nach radial außen überstehende, in Fig. 3 nicht dargestellte Anschlagsnasen auf, die ein unbeabsichtigtes Abrutschen der Schiebehülsen 133 von den Aufnahmeabschnitten 124 hinreichend blockieren, bei einem erstmaligen Aufschieben einer Schiebehülse 133 auf einen Aufnahmeabschnitt 124 aber nach Überwinden eines gewissen Widerstands auf den Aufnahmeabschnitt 124 aufschiebbar sind.

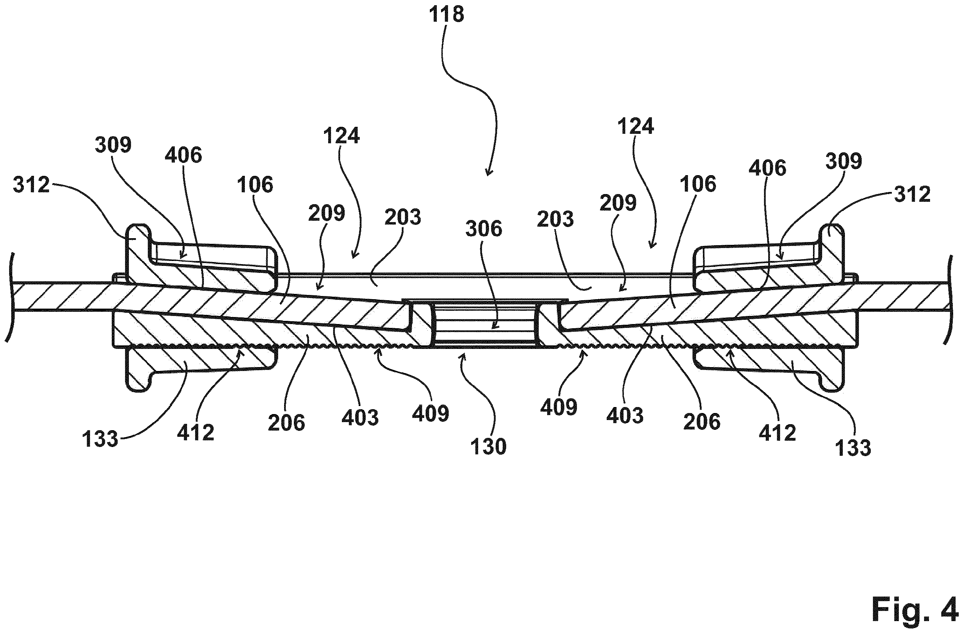

Fig. 4 zeigt in einem Längsschnitt das Ausführungsbeispiel gemäß Fig. 3 in Gestalt des Axialverbinders 118 beim Verbinden jeweils eines hier an dem Mittenabschnitt 130 anliegenden Endes von zwei Stäben 106 mit den Schiebehülsen 133 in einer die Enden der Stäbe 106 klemmenden Endstellung. Aus Fig. 4 lässt sich entnehmen, dass die an den jeweiligen Stabaufnahmeraum 209 angrenzenden Innenwände 403 als Innenseiten der Bodenwangen 206 der Aufnahmeabschnitte 124 in Richtung des Mittenabschnitt 130 derart schräg ausgerichtet sind, dass sich der Querschnitt des Stabaufnahmeraum 209 von der dem Mittenabschnitt 130 zugewandten inneren Seite zu der dem Mittenabschnitt 130 abgewandten äußeren Seite verkleinert.

Weiterhin lässt sich aus Fig. 4 erkennen, dass die Schiebehülsen 133 im Bereich der jeweiligen Einbuchtung 309 mit einem nach radial innen weisenden Innenwandabschnitt 406 ausgebildet sind, der ebenfalls schräg ausgebildet und bei bestimmungsgemäßer Anordnung der Schiebehülsen 133 komplementär zu der Innenwand 403 der gegenüberliegenden Bodenwange 206 ausgerichtet ist. Bei einem Verschieben der Schiebehülsen 133 von dem Mittenabschnitt 130 weg nach axial außen erfolgt dadurch ein Einklemmen der in jeweils einem Stabaufnahmeraum 209 angeordneten Enden der Stäbe 106 durch kontinuierliches Verringern des Abstandes zwischen der Innenwand 403 der Bodenwange 203 und dem gegenüberliegenden Innenwandabschnitt 406 der Schiebehülse 133.

Auf diese Art und Weise lässt sich, wie anhand Fig. 4 erläutert, ein Axialverbinder 118 und entsprechend ein T-Verbinder 115 sowie ein Kreuzverbinder 121 an wenigstens einem Ende eines Stabs 106 klemmend befestigen.

Bei einer Abwandlung des voranstehend erläuterten Ausführung eines Aufnahmeabschnitt 124 ist die Ausrichtung der Schräge der Bodenwange 206 gegenüber der erläuterten Ausführung in Längsrichtung invertiert, so dass die Klemmung eines Stabs 106 bei einem Verschieben der Schiebehülse 133 von dem freien Ende des Aufnahmeabschnitts 124 weg nach axial innen erfolgt.

Zum Sichern der Klemmung des Endes eines Stabs 106 sind an einer radialen Außenseite eines Aufnahmeabschnitts 124 und der gegenüberliegenden Innenseite einer den Aufnahmeabschnitt 124 umgebenden Schiebehülse 133 zueinander komplementäre Verrastriffelungen 409, 412 ausgebildet, die bei gegenseitigem Eingriff ein unbeabsichtigtes Verschieben der Schiebehülsen 133 aus der klemmenden Endstellung in Richtung eines Randabschnitts 127 beziehungsweise eines Mittenabschnitts 130 zumindest erschweren oder insbesondere bei einer ausgeprägten Tiefe der Verrastriffelungen 409, 412 in Verbindung mit einer asymmetrischen Formgebung weitgehend hemmen.

Zweckmäßigerweise sind zum Erhöhen der Reibungskräfte zwischen einem Ende eines Stabs 106 sowie der Innenseite 403 der Bodenwange 206 und/oder dem Innenwandabschnitt 406 des Schiebeteils 133 die Innenseite 203 der Bodenwange und/oder der Innenwandabschnitt 406 des Schiebeteils 133 mit in Fig. 4 nicht dargestellten Aufrauungen oder feinzahnigen Höckerstrukturen ausgebildet. Dadurch erhöht sich gegenüber glattwandigen Ausbildungen der Innenwand 403 der Bodenwange 206 und/oder des Innenwandabschnitts 406 der Schiebehülse 133 die Auszugskraft eines Endes insbesondere eines Stabs 106 mit einer verformbaren Außenseite.

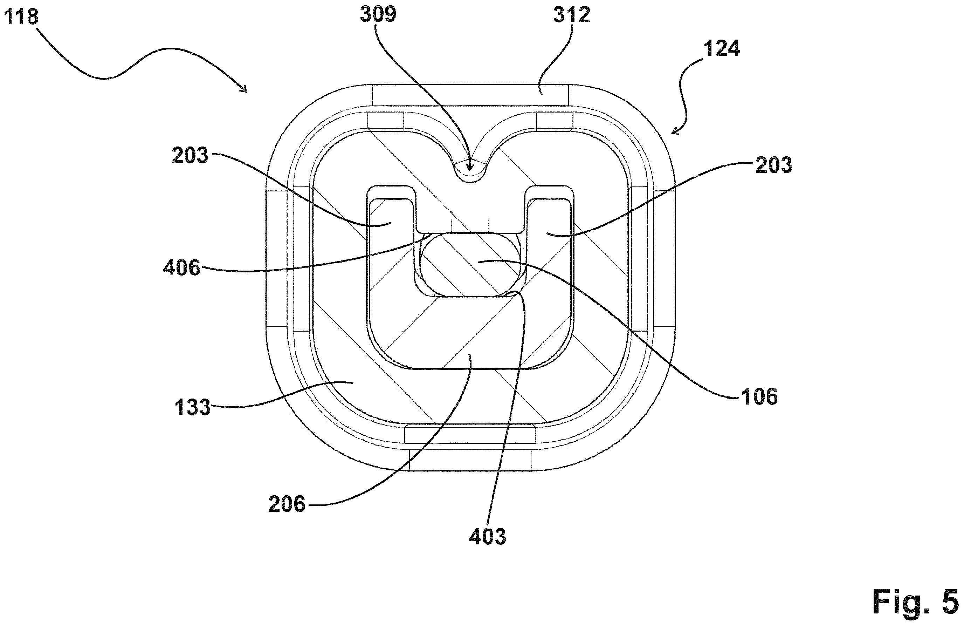

Fig. 5 zeigt in einem Querschnitt das Ausführungsbeispiel gemäß Fig. 3 und Fig. 4 in Gestalt eines Axialverbinders 118 mit der dargestellten Schiebehülse 133 in der klemmenden Endstellung mit Blick auf die axial außenseitig liegende Randwulst 312. Aus Fig. 5 in Verbindung mit Fig. 4 ist ersichtlich, dass in dieser klemmenden Anordnung der Schiebehülse 133 das Ende des Stabs 106 verhältnismäßig großflächig zwischen der Innenwand 403 der Bodenwange 206 und dem Innenwandabschnitt 406 der Schiebehülse 133 im Bereich der Einbuchtung 309 eingeklemmt ist. Insbesondere bei einem Herstellen aus einem hartelastischen Kunststoffmaterial lassen sich vorzugsweise bei gegenüber der Längsrichtung verhältnismäßig kleinen Schrägwinkel der Innenwände 403 der Bodenwange 206 und des Innenwandabschnitts 406 der Schiebehülse 133 unter einem gewissen Verformen insbesondere der Schiebehülse 133 durch Überschieben über einen reinen Formschluss hinaus verhältnismäßig hohe, in radialer Richtung wirkende Klemmkräfte erzeugen.

Im Hinblick auf einen verhältnismäßig einfachen Aufbau und eine relativ hohe Stabilität ist es vorteilhaft, die Schiebehülse 133 wie bei den dargestellten Ausführungsbeispielen umfänglich geschlossen auszubilden.

Für den Fall, dass ein Aufdrücken eines Schiebeteils vorgesehen ist, ist es zweckmäßig, eine derartige nicht dargestellte U-artige Schiebeklammer mit zwei seitlich angeordneten Randwangen mit den Aufnahmeabschnitt 124 hintergreifenden freien Enden auszubilden. Zum zuverlässigen Vermeiden eines Aufspreizens der freien Enden der Randwangen der Schiebeklammer ist es vorteilhaft, diese endseitig mit spitzwinklig nach radial innen vorstehenden Rastabschnitten auszubilden, die in eine in der Bodenwange des Aufnahmeabschnitts ausgebildete Rastnut eingreifen.

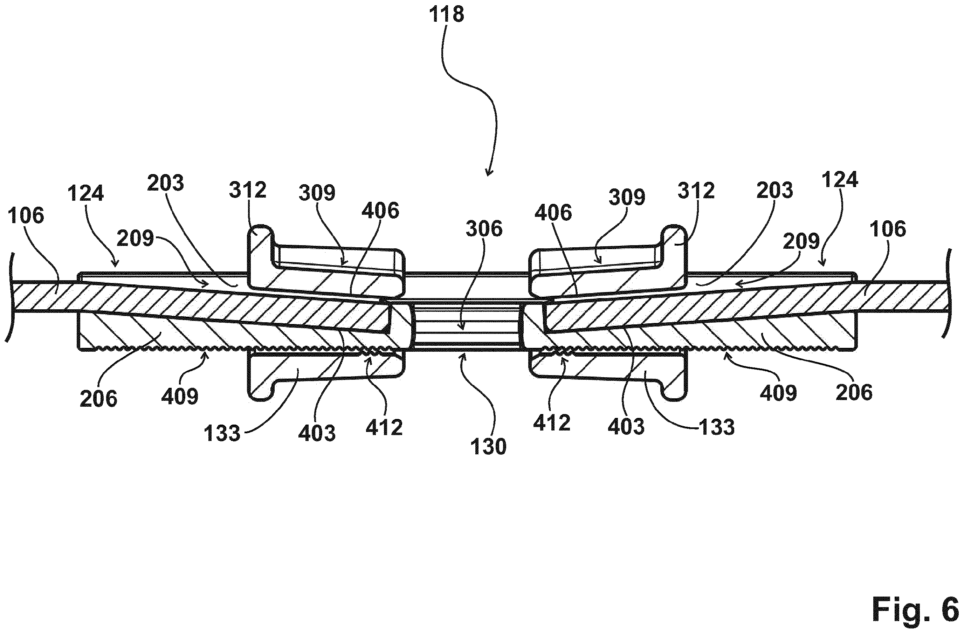

Fig. 6 zeigt in einem Längsschnitt das Ausführungsbeispiel gemäß Fig. 3 in Gestalt eines Axialverbinders 118 zum Verbinden von Enden von zwei Stäben 106 mit verhältnismäßig kleinen Querschnittsdimensionen mit den Schiebehülsen 133 in einer dem Mittenabschnitt 130 benachbarten, noch losen Anfangsstellung. Aus Fig. 6 ist ersichtlich, dass in dieser Anfangsstellung zwischen den Innenwänden 403 der Bodenwangen 206 der Aufnahmeabschnitte 124 und den Innenwandabschnitten 406 der Schiebehülsen 133 im Bereich der Einbuchtung 309 ein gegenüber den Querschnittsdimensionen der Stäbe 106 merklich größerer Abstand in radialer Richtung vorhanden ist, so dass in dem vorliegenden Fall die Schiebehülsen 133 verhältnismäßig weit nach axial außen zu verschieben sind, bis eine hinreichende feste klemmende Endstellung erreicht ist.

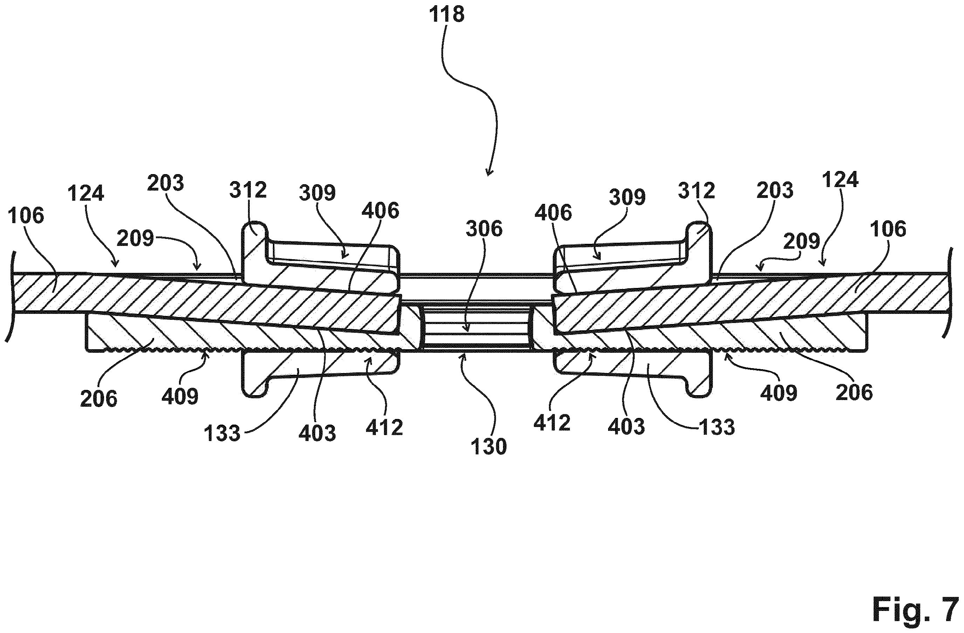

Fig. 7 zeigt in einem Längsschnitt das Ausführungsbeispiel gemäß Fig. 3 in Gestalt eines Axialverbinders 118 zum Verbinden von Enden von zwei Stäben 106 mit verhältnismäßig großen, gegenüber den Querschnittabmessungen der in Fig. 3 bis Fig. 6 dargestellten Stäbe 106 merklich größeren Querschnittsdimensionen mit den Schiebehülsen 133 in einer klemmenden Endstellung. Aufgrund der verhältnismäßig großen Querschnittsdimensionen der in Fig. 7 dargestellten Stäbe 106 sind die Endstellungen der Schiebehülsen 133 bereits in einem verhältnismäßig kleinen Abstand in Längsrichtung von dem Mittenabschnitt 130 erreicht. Dies hat jedoch keinerlei Einfluss auf die erzielten Klemmkräfte.

Somit lässt sich festhalten, dass sich T-Verbinder 115, Axialverbinder 118 und Kreuzverbinder 121 gemäß den voranstehend erläuterten Ausführungsbeispielen der Erfindung an Enden von Stäben 106 mit Querschnittsdimensionen über einen verhältnismäßig großen Bereich sehr zuverlässig befestigen lassen.

Hierbei sei angemerkt, dass zum Erzielen des voranstehend erläuterten Klemmeffekts nicht zwingend unterbrechungsfreie Innenwände 403 und Innenwandabschnitte 406 vorhanden sein müssen, sondern dass die Innenwände 403 und/oder Innenwandabschnitte 406 beispielsweise auch rippenartig mit sich nach radial innen erstreckenden, mit Stirnseiten abschließenden Stegen mit jeweils einer resultierenden, entsprechend einer im wesentlichen durchgehenden Fläche gleichermaßen an den Stirnseiten klemmend wirksamen Schrägen in Längsrichtung ausgebildet sein können.

## Patentansprüche

1. Vorrichtung zum Befestigen an wenigstens einem länglichen Element (106) mit wenigstens einem sich in einer Längsrichtung erstreckenden Aufnahmeabschnitt (124) zum Aufnehmen eines Endes eines länglichen Elements (106) und mit einem Klemmmittel (133) zum Befestigen des Aufnahmeabschnitts (124) an einem Ende eines länglichen Elements (106), wobei der Aufnahmeabschnitt (124) mit zwei Seitenwangen (203) und mit einer sich zwischen den Seitenwangen (203) erstreckenden Bodenwange (206) ausgebildet ist, die einen einseitig offenen Aufnahmeraum (209) begrenzen, wobei eine Innenseite (403) der Bodenwange (206) unter Ausbilden einer Schräge wenigstens abschnittsweise gegenüber der Längsrichtung schräg angestellt ist, wobei das Klemmmittel ein einem Aufnahmeabschnitt (124) zugeordnetes Schiebeteil (133) ist, das den betreffenden Aufnahmeabschnitt (124) wenigstens bereichsweise unter Überdecken der offenen Seite des Aufnahmeraums (209) umschließt, und wobei das Schiebeteil (133) mit einem Innenwandabschnitt (406) ausgebildet ist, der bei den Aufnahmeabschnitt (124) umschließender Anordnung des Schiebeteils (133) zu der Innenseite (403) der Bodenwange (206) wenigstens abschnittsweise komplementär schräg ausgebildet ist, **dadurch gekennzeichnet, dass** ein einziger Aufnahmeabschnitt (124) vorhanden ist, der mit einem eine quer zu der Längsrichtung ausgerichtete Durchführausnehmung (306) aufweisenden, an den Aufnahmeabschnitt (124) angrenzenden Randabschnitt (127) verbunden ist.

2. Vorrichtung zum Befestigen an wenigstens einem länglichen Element (106) mit wenigstens einem sich in einer Längsrichtung erstreckenden Aufnahmeabschnitt (124) zum Aufnehmen eines Endes eines länglichen Elements (106) und mit einem Klemmmittel (133) zum Befestigen des Aufnahmeabschnitts (124) an einem Ende eines länglichen Elements (106), wobei der Aufnahmeabschnitt (124) mit zwei Seitenwangen (203) und mit einer sich zwischen den Seitenwangen (203) erstreckenden Bodenwange (206) ausgebildet ist, die einen einseitig offenen Aufnahmeraum (209) begrenzen, wobei eine Innenseite (403) der Bodenwange (206) unter Ausbilden einer Schräge wenigstens abschnittsweise gegenüber der Längsrichtung schräg angestellt ist, wobei das Klemmmittel ein einem Aufnahmeabschnitt (124) zugeordnetes Schiebeteil (133) ist, das den betreffenden Aufnahmeabschnitt (124) wenigstens bereichsweise unter Überdecken der offenen Seite des Aufnahmeraums (209) umschließt, und wobei das Schiebeteil (133) mit einem Innenwandabschnitt (406) ausgebildet ist, der bei den Aufnahmeabschnitt (124) umschließender Anordnung des Schiebeteils (133) zu der Innenseite (403) der Bodenwange (206) wenigstens abschnittsweise komplementär schräg ausgebildet ist, **dadurch gekennzeichnet, dass** zwei Aufnahmeabschnitte (124) vorhanden sind, die beidseitig eines an die Aufnahmeabschnitte (124) angrenzenden Mittenabschnitts (130) angeordnet sind.

3. Vorrichtung nach Anspruch 2, **dadurch gekennzeichnet, dass** der Mittenabschnitt (130) mit einer quer zu der Längsrichtung ausgerichteten Durchführausnehmung (306) ausgebildet ist.

4. Vorrichtung nach einem der Ansprüche 1 bis 3, **dadurch gekennzeichnet, dass** die oder jede Schräge der Bodenwange (206) beziehungsweise des Schiebeteils (133) so ausgerichtet ist, dass sich in Bezug auf die Längsrichtung der Querschnitt des jeweiligen Aufnahmeraums (209) von einer Innenseite zu einer Außenseite verkleinert.

5. Vorrichtung nach einem der Ansprüche 1 bis 4, **dadurch gekennzeichnet, dass** das Schiebeteil (133) eine nach radial innen vorstehende Einbuchtung (309) aufweist, an deren nach radial innen weisender, der Innenseite (403) der Bodenwange (206) gegenüber liegender Stirnseite der Innenwandabschnitt (406) ausgebildet ist.

6. Vorrichtung nach einem der Ansprüche 1 bis 5, **dadurch gekennzeichnet, dass** an einem in Bezug auf die Längsrichtung axial außen liegenden Ende des oder jedes Aufnahmeabschnitts (124) eine Struktur zur Verliersicherung des Schiebeteils (133) ausgebildet ist.

7. Vorrichtung nach einem der Ansprüche 1 bis 6, **dadurch gekennzeichnet, dass** an einer radial außen angeordneten Außenseite des Aufnahmeabschnitt (124) und an einer radial innen angeordneten Innenseite des Schiebeteils (133) zueinander komplementär ausgebildete Raststrukturen (409, 412) ausgebildet sind.

8. Vorrichtung nach einem der Ansprüche 1 bis 7, **dadurch gekennzeichnet, dass** das Schiebeteil (133) in Bezug auf die Längsrichtung randseitig eine nach radial außen vorstehende Randwulst (312) aufweist.

9. Vorrichtung nach Anspruch 1 oder Anspruch 3, **dadurch gekennzeichnet, dass** eine aus einem elektrisch leitfähigen Material hergestellte Verbindungsplatte (136) vorhanden ist, die in der Durchführausnehmung (306) angeordnet ist.

## Claims

1. Device for fastening to at least one elongate element (106) having at least one receiving portion (124) extending in a longitudinal direction for receiving an end of an elongate element (106) and having clamping means (133) for fastening the receiving portion (124) to an end of an elongate element (106), wherein the receiving portion (124) is designed with two side cheeks (203) and with a bottom cheek (206) extending between the side cheeks (203), which delimit a receiving space (209) open on one side, wherein an inner side (403) of the bottom cheek (206) is inclined at least partially with respect to the longitudinal direction forming an incline, wherein the clamping means is a sliding part (133) associated with a receiving portion (124), which at least partially surrounds the respective receiving portion (124) while covering the open side of the receiving space (209), and wherein the sliding part (133) is designed with an inner wall portion (406) which, when the sliding part (133) is arranged to surround the receiving portion (124), is designed to be at least partially complementarily inclined with respect to the inner side (403) of the bottom cheek (206), **characterized in that** a single receiving portion (124) is provided, which is connected to an edge portion (127) adjacent to the receiving portion (124) and having a feedthrough recess (306) oriented transversely to the longitudinal direction.

2. Device for fastening to at least one elongate element (106) having at least one receiving portion (124) extending in a longitudinal direction for receiving an end of an elongate element (106) and having clamping means (133) for fastening the receiving portion (124) to an end of an elongate element (106), wherein the receiving portion (124) is designed with two side cheeks (203) and with a bottom cheek (206) extending between the side cheeks (203), which delimit a receiving space (209) open on one side, wherein an inner side (403) of the bottom cheek (206) is inclined at least partially with respect to the longitudinal direction forming an incline, wherein the clamping means is a sliding part (133) associated with a receiving portion (124), which at least partially surrounds the respective receiving portion (124) while covering the open side of the receiving space (209), and wherein the sliding part (133) is designed with an inner wall portion (406) which, when the sliding part (133) is arranged to surround the receiving portion (124), is designed to be at least partially complementarily inclined with respect to the inner side (403) of the bottom cheek (206), **characterized in that** two receiving portions (124) are provided, arranged on both sides of a central portion (130) adjacent to the receiving portions (124).

3. Device according to Claim 2, **characterized in that** the central portion (130) is designed with a feedthrough recess (306) oriented transversely to the longitudinal direction.

4. Device according to any one of Claims 1 to 3, **characterized in that** the, or each, incline of the bottom cheek (206), or of the sliding part (133), is oriented in such a manner that with respect to the longitudinal direction, the cross-section of the respective receiving space (209) decreases from an inner side to an outer side.

5. Device according to any one of Claims 1 to 4, **characterized in that** the sliding part (133) has a radially inwardly projecting recess (309), on the radially inwardly facing end of which lying opposite the inner side (403) of the bottom cheek (206) the inner wall portion (406) is formed.

6. Device according to any one of Claims 1 to 5, **characterized in that** a structure for securing the sliding part (133) against loss is formed on an end of the, or of each, receiving portion (124) lying axially outward in respect of the longitudinal direction.

7. Device according to any one of Claims 1 to 6, **characterized in that** locking structures (409, 412) which are complementary to one another are formed on an outer side of the receiving portion (124) arranged radially outwardly and on an inner side of the sliding part (133) arranged radially inwardly.

8. Device according to any one of Claims 1 to 7, **characterized in that** the sliding part (133) has, with respect to the longitudinal direction, a radially outwardly projecting edge bead (312) at an edge.

9. Device according to Claim 1 or Claim 3, **characterized in that** a connecting plate (136) made of an electrically conductive material is provided, which is arranged in the feedthrough recess (306).

## Revendications

1. Dispositif de fixation à au moins un élément oblong (106), comprenant au moins une section de réception (124) s'étendant dans une direction longitudinale pour recevoir une extrémité d'un élément oblong (106) et un moyen de serrage (133) pour fixer la section de réception (124) à une extrémité d'un élément oblong (106), la section de réception (124) étant réalisée avec deux supports latéraux (203) et avec un support de fond (206) s'étendant entre les supports latéraux (203), qui délimitent un espace de réception (209) ouvert d'un côté, un côté intérieur (403) du support de fond (206) étant incliné au moins par sections par rapport à la direction longitudinale en formant une pente, le moyen de serrage étant une pièce coulissante (133) associée à une section de réception (124), qui entoure la section de réception (124) concernée au moins par zones en recouvrant le côté ouvert de l'espace de réception (209), et la pièce coulissante (133) étant réalisée avec une section de paroi intérieure (406), qui, lorsque la pièce coulissante (133) est disposée de manière à entourer la section de réception (124), est réalisée inclinée de manière complémentaire au moins par sections par rapport au côté intérieur (403) du support de fond (206), **caractérisé en ce qu'**il existe une seule section de réception (124) qui est reliée à une section de bord (127) adjacente à la section de réception (124) et présentant un évidement de passage (306) orienté transversalement à la direction longitudinale.

2. Dispositif de fixation à au moins un élément oblong (106), comprenant au moins une section de réception (124) s'étendant dans une direction longitudinale pour recevoir une extrémité d'un élément oblong (106) et un moyen de serrage (133) pour fixer la section de réception (124) à une extrémité d'un élément oblong (106), la section de réception (124) étant réalisée avec deux supports latéraux (203) et avec un support de fond (206) s'étendant entre les supports latéraux (203), qui délimitent un espace de réception (209) ouvert d'un côté, un côté intérieur (403) du support de fond (206) étant incliné au moins par sections par rapport à la direction longitudinale en formant une pente, le moyen de serrage étant une pièce coulissante (133) associée à une section de réception (124), qui entoure la section de réception (124) concernée au moins par zones en recouvrant le côté ouvert de l'espace de réception (209), et la pièce coulissante (133) étant réalisée avec une section de paroi intérieure (406), qui, lorsque la pièce coulissante (133) est disposée de manière à entourer la section de réception (124), est réalisée inclinée de manière complémentaire au moins par sections par rapport au côté intérieur (403) du support de fond (206), **caractérisé en ce qu'**il existe deux sections de réception (124) qui sont disposées de part et d'autre d'une section centrale (130) adjacente aux sections de réception (124).

3. Dispositif selon la revendication 2, **caractérisé en ce que** la section centrale (130) est formée avec un évidement de passage (306) orienté transversalement à la direction longitudinale.

4. Dispositif selon l'une des revendications 1 à 3, **caractérisé en ce que** la ou chaque pente du support de fond (206) ou de la pièce coulissante (133), est orientée de telle sorte que, par rapport à la direction longitudinale, la section transversale de l'espace de réception (209) respectif diminue d'un côté intérieur à un côté extérieur.

5. Dispositif selon l'une des revendications 1 à 4, **caractérisé en ce que** la pièce coulissante (133) présente un renfoncement (309) faisant saillie radialement vers l'intérieur, sur la face frontale de laquelle, orientée radialement vers l'intérieur et opposée au côté intérieur (403) du support de fond (206), est formée la section de paroi intérieure (406).

6. Dispositif selon l'une des revendications 1 à 5, **caractérisé en ce qu'**à une extrémité de la ou de chaque section de réception (124) située axialement à l'extérieur par rapport à la direction longitudinale, est formée une structure destinée à empêcher la perte de la pièce coulissante (133).

7. Dispositif selon l'une des revendications 1 à 6, **caractérisé en ce que** des structures d'encliquetage (409, 412) complémentaires les unes des autres sont formées sur un côté extérieur, disposé radialement à l'extérieur, de la section de réception (124) et sur un côté intérieur, disposé radialement à l'intérieur, de la pièce coulissante (133).

8. Dispositif selon l'une des revendications 1 à 7, **caractérisé en ce que** la pièce coulissante (133) présente, côté bord, par rapport à la direction longitudinale, un bourrelet de bord (312) faisant saillie radialement vers l'extérieur.

9. Dispositif selon la revendication 1 ou la revendication 3, **caractérisé en ce qu'**une plaque de connexion (136) réalisée en un matériau électriquement conducteur est présente et est disposée dans l'évidement de passage (306).
